# EUROPÄISCHE PATENTANMELDUNG

(11) **EP 1 335 632 A2**
(43) Veröffentlichungstag der Anmeldung: **13.08.2003**
(21) Anmeldenummer: 03002771.8
(22) Anmeldetag: 07.02.2003
(51) Int. Cl.: H05B 3/06

(54) **Befestigungseinrichtung für elektrische Heizeinrichtungen**

(30) Priorität: 08.02.2002 DE 10206062
(71) Anmelder: E.G.O. ELEKTRO-GERÄTEBAU GmbH, D-75038 Oberderdingen (DE)
(72) Erfinder: Gänsler, Walter, 72336 Balingen (DE)
(74) Vertreter: Patentanwälte Ruff, Wilhelm, Beier, Dauster & Partner

(57) **Zusammenfassung**

Bei einem Ausführungsbeispiel der Erfindung wird eine Befestigungsvorrichtung für eine Induktionsheizeinrichtung (27) geschaffen. Diese besteht aus einem flächigen Montageträger (17), auf den mehrere Induktionsheizungen (27) montiert werden können. Die Induktionsheizeinrichtungen (27) sind auf Trägern (11) oder in Aufnahmetellern (28) befestigt. Sie weisen einerseits einen Klemmhaken (12) und andererseits einen Ansatz (15) mit einer durchgeführten Befestigungsschraube (21) auf. Mit dem Klemmhaken (12) werden sie in einem Längsschlitz (18) in dem Montageträger (17) geführt. Die Befestigungsschraube (21) wiederum greift in einen Längsschlitz (18), eine Schraublochlinie (20) oder ein Schraublochfeld (26) an verschiedenen Positionen ein. Durch Skalen (19) entlang der Längsschlitze (18) oder der Befestigung der Befestigungsschraube (21) kann eine genaue Position der Induktionsheizeinrichtung (27) festgelegt werden.

## Beschreibung

### Anwendungsgebiet und Stand der Technik

Die Erfindung betrifft eine Befestigungsvorrichtung für elektrische Heizeinrichtungen gemäß dem Oberbegriff des Anspruchs 1. Insbesondere sind die Heizeinrichtungen flächige Induktionsheizeinrichtungen, die beispielsweise unter einem Kochfeld angeordnet sind.

Bei der Montage von beispielsweise Induktionsheizungen für Glaskeramikkochfelder entspricht es einer Möglichkeit, dass die als vorgefertigte Einheiten bereitgestellten Induktionsspulen auf eine der Größe des Kochfeldes entsprechende Metallplatte aufgeklebt werden. Dieses Aufkleben erfolgt bevorzugt mittels eines Klebers oder doppelseitigen Klebebandes. Dabei besteht das Problem, dass eine Ausrichtung der Induktionsspulen entsprechend der geometrischen Vorgaben des Glaskeramikkochfeldes schwierig ist. Eine weitere Schwierigkeit besteht darin, dass eine Vorfertigung in größerem Maß wiederum die Bildung von Abwandlungen oder Varianten erschwert. In diesem Fall müssen die Induktionsspulen wieder abgenommen werden und erneut befestigt werden. Hierbei taucht dann erneut das Problem der genauen Ausrichtung auf.

### Aufgabe und Lösung

Der Erfindung liegt die Aufgabe zugrunde, eine eingangs genannte Befestigungsvorrichtung zu schaffen, mit der einerseits die Befestigung von Heizeinrichtungen an einem Montageträger einfach und andererseits mit gewünschter Genauigkeit möglich ist.

Diese Aufgabe wird gelöst durch eine Befestigungsvorrichtung mit den Merkmalen des Anspruchs 1. Bevorzugte sowie vorteilhafte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß weist die Befestigungsvorrichtung Befestigungsmittel auf. Des weiteren ist ein Montageträger vorgesehen. Die Befestigungsvorrichtung kann den Montageträger aufweisen. Mittels der Befestigungsmittel kann die Heizeinrichtung an dem Montageträger befestigt werden. Dabei sind die Befestigungsmittel derart ausgebildet, dass die Befestigung der Heizeinrichtung an dem Montageträger bezüglich der Position variabel ist, wobei sich dies auf die Position der Heizeinrichtung gegenüber dem Montageträger bezieht. Dies kann vorteilhaft durch das Heranziehen des Flächenschwerpunktes der Heizeinrichtung verdeutlicht werden.

In weiterer Ausgestaltung der Erfindung können Markierungsmittel vorgesehen sein, mit denen verschiedene Positionen der Befestigung der Heizeinrichtung an dem Montageträger markiert werden können. Damit ist es mit einer erfindungsgemäßen Befestigungsvorrichtung beispielsweise möglich, Positionen für verschiedene Varianten von Kochfeldern an einem Montageträger vorzumarkieren. Bei der Bildung von verschiedenen Varianten kann eine Heizeinrichtung leicht jeweils an den Markierungen ausgerichtet und befestigt werden. Andere Methoden, wie beispielsweise spezielle Schablonen, können dann entfallen. Somit kann sowohl eine anfängliche Befestigung einer Heizeinrichtung an dem Montageträger als auch die Bildung von Varianten durch Abmontieren der Heizeinrichtung und erneutes Befestigen sehr leicht erfolgen. Es braucht jeweils nur die zu einer gewünschten Position gehörige Markierung bekannt zu sein, um dann die Heizeinrichtung entsprechend zu befestigen. Somit können Hilfsmittel weitestgehend entfallen.

In weiterer Ausbildung der Erfindung kann die Befestigungsvorrichtung dazu dienen, eine oder mehrere Heizeinrichtungen unter einer Abdeckung, beispielsweise einem Glaskeramikkochfeld, anzubringen.

Die Markierungsmittel können zumindest teilweise, insbesondere größtenteils, an dem Montageträger ausgebildet sein. Dies kann durch Aufdrucken oder Aufkleben von Markierungen erfolgen. Ebenso können Markierungen auch ausgestanzt oder eingeprägt werden. Vorteilhaft kann ein Teil oder Bereich einer Heizeinrichtung derart ausgebildet sein, dass er funktional mit den Markierungsmitteln zusammenwirkt.

Bei einer beispielhaften Ausgestaltung der Erfindung können die Markierungsmittel in einem Bereich zwischen Heizungseinrichtung und Montageträger angeordnet sein. Dabei kann die Position bzw. Festlegung einer Heizungseinrichtung an dem Montageträger mittels Bestimmen einer von mehreren Markierungen der Markierungsmittel, welche eine bestimmte Position angibt, durch Anliegen eines Außenrandes oder charakteristischen Punktes der Heizungseinrichtung daran erfolgen. Auf diese Weise kann ein Teil der Heizeinrichtung mit den Markierungsmitteln zusammenwirken. So kann beispielsweise ein Ausrichten der Heizeinrichtung mittels der Markierungsmittel auch durch eine entsprechende Markierung oder ähnliches an der Heizeinrichtung erfolgen. Es kann eine Heizeinrichtung mit ihrem Rand entlang einer Skala bis zu einem bestimmten Punkt auf der Skala verschoben werden.

Die Markierungsmittel können auf vielfältige Art und Weise ausgeführt sein. Bevorzugt sind sie im wesentlichen als am Stück verlaufend bzw. in einem gewissen Bereich für mindestens zwei Heizeinrichtungen bestimmt ausgebildet. Auf diese Weise können Markierungsmittel vielseitiger verwendet werden.

Markierungsmittel können beispielsweise mit einer Skala ausgebildet sein. Diese Skala kann im wesentlichen eine lineare Skalierung bzw. eine Skaleneinteilung mit festen und gleichen Abständen aufweisen. Darüber hinaus können die Markierungsmittel einen im wesentlichen kontinuierlichen Verlauf aufweisen, beispielsweise bogenförmig oder vorteilhaft geradlinig. Eine beispielhafte Ausführung solcher Markierungsmittel kann als eine Art Lineal mit Millimeterskalierung, beispielsweise auf einen flächigen Montageträger aufgebracht, ausgebildet sein.

Die Befestigungsmittel können bevorzugt auf einfache Weise, insbesondere werkzeuglos, befestigt und/oder gelöst werden. Somit kann sowohl eine Montage einer Heizeinrichtung schnell erfolgen. Des weiteren ist es möglich, zur Bildung von Varianten vormontierte Heizeinrichtungen wieder zu lösen und an einer gewünschten anderen Position zu befestigen. Hier ist es von Vorteil, wenn die Befestigungsmittel wiederholt lösbar und befestigbar sind. Besonders bevorzugt wird hier eine Verschraubung. Dabei können die Befestigungsmittel wenigstens eine Befestigungsschraube aufweisen, welche an der Heizungseinrichtung und dem Montageträger angreift. Sie kann insbesondere in eine Öffnung bzw. ein Gewinde im Montageträger eingreifen.

In weiterer Ausgestaltung der Erfindung kann die Schraube entweder an der Heizeinrichtung oder an dem Montageträger in einem Längsschlitz verlaufen zur Verstellung der Position. Ein solcher Längsschlitz kann gerade oder auch vorteilhaft bogenförmig ausgebildet sein. Der Längsschlitz kann an dem Montageträger, an der Heizeinrichtung bzw. den Befestigungsmitteln oder an beiden vorgesehen sein.

Um Befestigungsaufwand zu sparen, kann beispielsweise eine Zweipunktbefestigung einer Heizeinrichtung einerseits ein Befestigungselement, wie beispielsweise einen Haken, aufweisen. Der zweite Befestigungspunkt kann dann mittels einer Schraube hergestellt werden.

Alternativ zu einer Verschraubung können Befestigungsmittel flächig sowie werkzeuglos lösbar sein. Besonders vorteilhaft sind auch solche Befestigungsmittel wiederholt verwendbar ausgebildet. Hier bieten sich beispielsweise textile Haftverschlüsse oder dergleichen an. Möglich sind auch wiederholt verwendbare Klebestreifen oder dergleichen.

Bei einer vorerwähnten Befestigung mittels mindestens zweier Befestigungspunkte, wobei Befestigungspunkte in diesem Sinne nicht als geometrisch punktförmig zu verstehen ist, kann eine Befestigung mittels der beiden Punkte in einen bestimmten Bereich verstellbar sein. Auf diese Weise ist es möglich, innerhalb bestimmter Grenzen eine Heizeinrichtung beliebig und ohne Einschränkung zu verstellen bzw. auszurichten. Eine Ausrichtung einer Heizeinrichtung kann auch in kleinen diskreten Schritten erfolgen, beispielsweise an einer von mehreren vorgegebenen Positionen.

Ein Montageträger kann vielfältig ausgebildet sein. Bei einem Ausführungsbeispiel der Erfindung kann er zur Befestigung an einer Abdeckung ausgebildet sein. Eine solche Abdeckung kann ein Glaskeramikfeld oder dergleichen für ein Kochfeld sein. Dabei kann der Montageträger eine Fläche definieren, welche an die Fläche dieser Abdeckung angepasst ist, insbesondere in etwa gleich geformt ist. Dabei kann der Montageträger einerseits ein Rahmen sein, der mit der Abdeckung verbunden wird. Andererseits kann der Montageträger eine Grundplatte oder ein Gehäuse sein. Ein solches Gehäuse kann dann sämtliche Heizeinrichtungen, möglicherweise auch eine zugehörige Steuerung, beispielsweise für ein Kochfeld aufnehmen.

In weiterer Ausgestaltung der Erfindung kann der Montageträger mehrteilig sein. Dabei kann er einen Haupt-Montageträger sowie mindestens eine, vorzugsweise mehrere, Unter-Montageträger aufweisen. Dies kann für spezielle Arten von Heizeinrichtungen vorgesehen sein, für die es vorteilhaft ist, wenn die Heizeinrichtung mittels eines solchen Unter-Montageträgers befestigt wird.

Beispielsweise ist es möglich, die Unter-Montageträger zur Aufnahme einer Heizeinrichtung auszubilden. Dies wird später noch beschrieben. Alternativ ist es möglich, Unter-Montageträger als Bügel auszubilden, welche eine Heizeinrichtung übergreifen. Wenigstens ein Teil der Markierungsmittel kann dabei an einem Unter-Montageträger vorgesehen sein, um die Heizeinrichtung an dem Haupt-Montageträger auszurichten. Die Unter-Montageträger können mit ihren Enden oder einem Außenrand an dem Haupt-Montageträger befestigbar sein, vorzugsweise formschlüssig bzw. mit einer Verschraubung.

Eine Befestigung der Heizeinrichtung an dem Montageträger kann einerseits starr sein. Andererseits kann sie zwar seitlich fixiert, jedoch höhenverstellbar sein. Die Höhenverstellbarkeit kann insbesondere selbstständig ausgeführt sein, beispielsweise mittels einer Federeinrichtung. Dies bedeutet, dass die Heizeinrichtung federelastisch nach oben ragt und beispielsweise beim Anlegen an eine Abdeckung permanent mit einer vordefinierbaren Federkraft an dieser anliegt.

Weiters ist es möglich, die Heizeinrichtung mit wenigstens einem stabilen Außenrahmen oder dergleichen zu versehen. Ein solcher Außenrahmen kann, insbesondere bei einer Induktionsheizung, vorteilhaft aus Kunststoff ausgebildet sein. Insbesondere kann er als eine Art Teller ausgebildet sein und die Heizeinrichtung aufnehmen.

Unabhängig oder auch in Kombination mit mindestens einem der vorstehend beschriebenen Merkmale kann eine Befestigungsvorrichtung für flächige elektrische Heizeinrichtungen erfindungsgemäß bei einer Induktionsheizung als Heizeinrichtung einen Aufnahmeteller aufweisen. Eine Induktionsheizung ist vorteilhaft mit einer flachen, runden Induktionsspule versehen und in einem solchen Aufnahmeteller angeordnet. Auf diese Art und Weise kann eine Induktionsheizung auch mit mehrteiligem Aufbau leicht montiert und vor allem leicht und effizient weiter gehandhabt werden. Ein Aufnahmeteller kann dabei Teil des Montageträgers und/oder der Befestigungsmittel sein. Insbesondere können Befestigungsschrauben oder flächige Befestigungsmittel an dem Aufnahmeteller angreifen und mit dem Montageträger zusammenwirken.

Ein Aufnahmeteller kann speziell für eine Induktionsheizung ausgebildet sein. Dazu kann er beispielsweise Ausformungen aufweisen, in welchen Teile der Induktionsspule, beispielsweise Ferritkerne, positioniert und/oder befestigt werden können. Im Vergleich zum üblichen Aufbau von Induktionsheizungen, bei denen Ferritkerne, Induktionsspule, Isolierung und eventuell ein Temperatursensor mehr oder weniger fest verbunden werden, kann so eine kompakte Funktionseinheit geschaffen werden.

Des weiteren kann ein Aufnahmeteller, eventuell auch ein Montageträger, eine Kabelführung für die Anschlusskabel der Induktionsheizung aufweisen. Eine solche Kabelführung kann entweder als Durchführung der Kabel durch den Aufnahmeteller oder den Montageträger im wesentlichen an einer Stelle ausgebildet sein. Alternativ kann eine Kabelführung als länglicher Kabelkanal ausgebildet sein. Diese beiden Möglichkeiten gelten auch für einen beispielsweise flächigen Montageträger in Form einer Platte. Auf diese Weise können die Anschlusskabel für Induktionsheizungen einfach und sicher verlegt werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den schematisch zu verstehenden Zeichnungen dargestellt und werden im folgenden näher erläutert. In den Zeichnungen zeigen:
- Fig.1: eine Draufsicht auf einen Träger für eine Induktionsspule mit einem Befestigungshaken an einer Seite und einem Längsschlitz an der anderen,
- Fig.2: eine Seitenansicht des Befestigungshakens aus Fig.1,
- Fig.3/4: Draufsichten auf flächige Montageträger mit Längsschlitzen verschiedener Art sowie Linien oder Feldern von Schraublöchern und
- Fig.5: eine Explosionsdarstellung des Aufbaus einer Induktionsspule mit einem speziell ausgebildeten Aufnahmeteller.

### Detaillierte Beschreibung der Ausführungsbeispiele

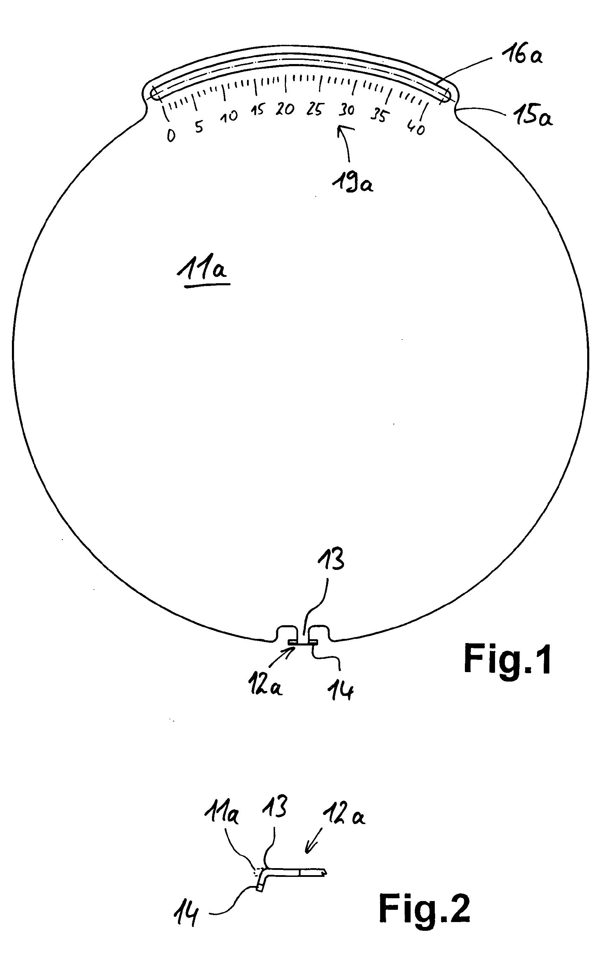

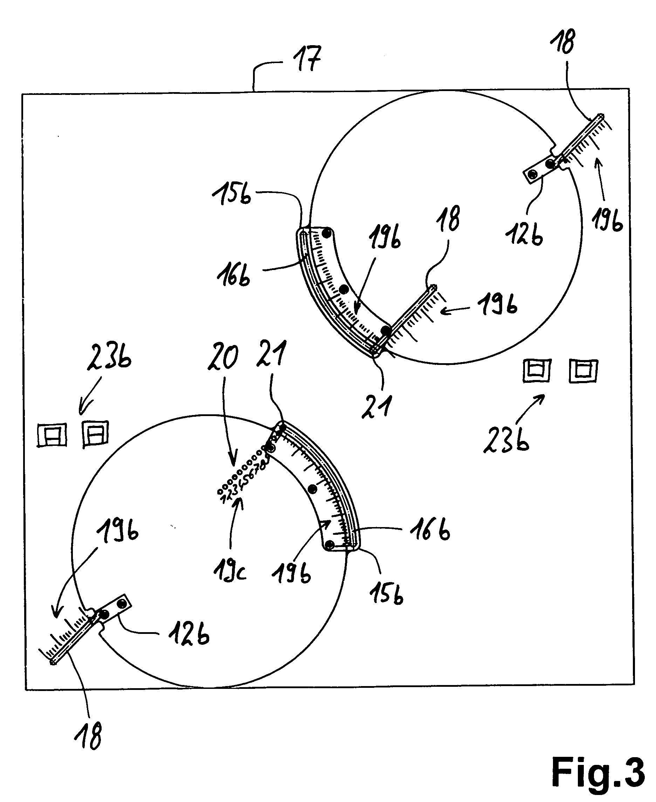

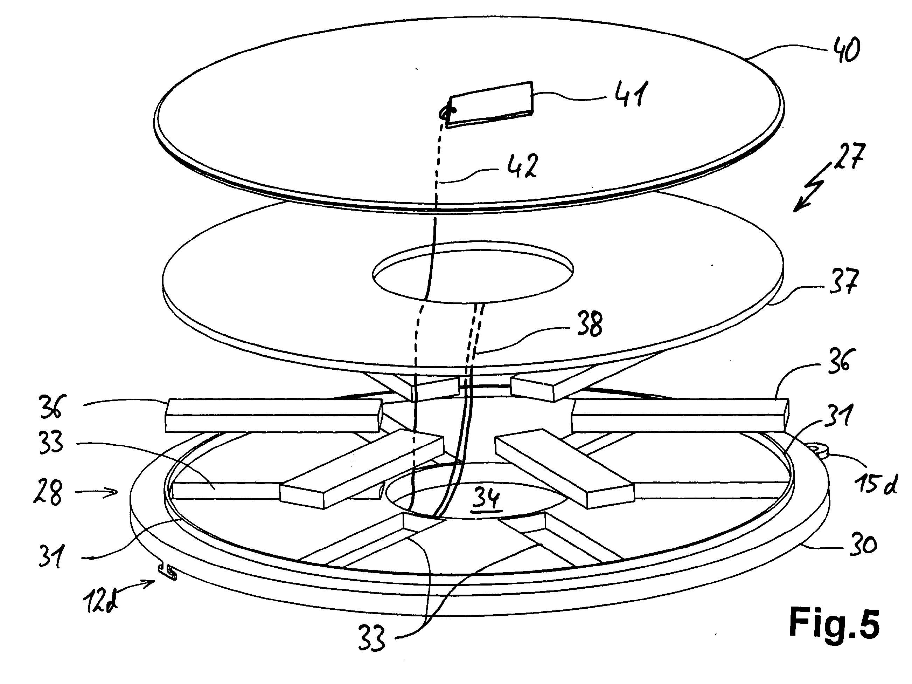

In Fig.1 ist ein Träger 11a dargestellt, der an einem Montageträger, wie er beispielsweise aus den Fig.3 bis 5 hervorgeht, befestigt werden kann. Der Träger 11a ist im wesentlichen eine kreisförmige Platte und weist als Befestigungsmittel sowohl einen Klemmhaken 12a als auch einen Längsschlitz 16 in einem Ansatz 15a auf. Der Träger 11a kann aus Metallblech oder stabilem Kunststoff bestehen. Auf einen derartigen Träger 11a kann beispielsweise eine flache und runde Induktionsspule aufgebracht werden. Mittels des Trägers 11a kann dann die Induktionsspule montiert werden. Dies hat den Vorteil, dass, wie zu dem Aufbau in Fig.5 später erläutert wird, die Induktionsspule eine vorgefertigte und stabile sowie gut handhabbare Baueinheit ist.

Entlang des bogenförmigen Längsschlitzes 16a ist eine Skala 19a angebracht. Diese Skala 19a kann auf verschiedene Art und Weise angebracht sein, beispielsweise durch Stanzen, Prägen, Bedrucken oder Aufspritzen. Wie zu erkennen ist, sind verschiedene Positionen auf der Skala 19a markiert. Ähnlich einer Skalierung eines Kurvenlineals oder eines Winkelmessers sind Markierungen mit gleichem Abstand zueinander vorgesehen. In Fünferschritten sind sie durchnummeriert. Die Markierungen können entweder einem Winkelmaß entsprechen oder andere Angaben sein, beispielsweise gemessen in Millimetern. Alternativ können vorbestimmte Positionen angezeichnet sein, die nicht unbedingt in gleichem Abstand zueinander vorhanden sein müssen.

Der Längsschlitz 16a muss nicht zwangsläufig bogenförmig sein. Es bietet sich jedoch an, ihn entsprechend der Außenkontur des Trägers 11a auszubilden.

Mittels des Klemmhakens 12a kann der Träger 11a in einem Längsschlitz oder dergleichen an einem Montageträger 17, wie er aus Fig.3 hervorgeht, befestigt werden. In Fig.2 ist der Klemmhaken 12a in Seitenansicht dargestellt. Er besteht aus einem durch Einschnitte von dem restlichen Träger 11 a abgetrennten Arm 13 und einem von dessen Ende T-förmig abgehenden Endstück 14. Der Arm 13 weist dabei eine Breite etwas geringer als die Breite eines zugehörigen Längsschlitzes 16 auf. Das Endstück 14 befindet sich soweit unterhalb der Unterseite des Trägers 11a, dass es in Abstimmung mit der Abwinkelung des Armes 13 bei schräg gehaltenem Träger 11a soweit durch den Montageträger 17 reicht, dass eine freie Verschiebbarkeit gewährleistet ist. Wird dagegen der Träger 11a auf den Montageträger 17 aufgelegt, so verklemmt sich der Klemmhaken 12a bzw. das Endstück 14 gegen die Unterseite des Montageträgers 17. Auf diese Weise wird durch Auflegen des Trägers 11a auf den Montageträger 17 seine Position im wesentlichen festgelegt. Durch die Länge des Arms 13 wird eine gewisse Elastizität in der Klemmhalterung erzielt.

In Fig.3 sind leicht abgewandelte Ausführungen von Trägern 11b dargestellt, die auf einem rechteckigen und plattenförmigen Montageträger 17 befestigt sind. Bei diesen Trägern 11b sind die Ansätze 15b mit den Längsschlitzen 16b sowie die Klemmhaken 12b als separate Teile ausgebildet und an den Trägern 11b befestigt. Eine solche Befestigung kann durch Verschrauben, Vernieten, Verschweißen oder Verkleben hergestellt werden. Bevorzugt wird ein Verschrauben.

In dem Montageträger 17 sind Längsschlitze 18 sowie eine Schraublochlinie 20 vorgesehen. Die Schraublochlinie 20 verläuft gerade und weist eine Anzahl von Schraublöchern auf. Damit entspricht sie im wesentlichen einem der Längsschlitze 18, allerdings mit diskreten Positionen.

Entlang der Längsschlitze 18 sind Skalen 19 vorhanden. Sie können ähnlich wie die Skala 19a hergestellt werden, siehe hierzu vorstehende Beschreibung. Der Schraublochlinie 20 ist eine reine Zahlenskala 19c zugeordnet. Dabei sind die einzelnen Schraublöcher durchnummeriert.

Eine Befestigung samt Ausrichtung der Träger 11b an dem Montageträger 17 erfolgt dadurch, dass zuerst die Klemmhaken 12b in die entsprechenden Längsschlitze 18 durch Parallelstellen eingeführt werden. Anschließend wird der Träger 11b entsprechend gedreht. Gemäß einer vorgegebenen Montageposition wird nun mittels Abgleichen der Skala die Ausrichtung und Befestigung vorgenommen.

Dies kann bei dem Träger 11b rechts oben derart erfolgen, dass der Träger einerseits entlang einer der Skalen 19b an einem der beiden Längsschlitze 18 positioniert wird. Zur genauen Bestimmung bzw. Ablesen der Skala kann der Außenrand des Trägers 11b oder der Arm 13 eines Klemmhakens 12b im Bereich des Durchtretens durch den Montageträger 17 hinsichtlich der Skala 19b verwendet werden. Der zweite Teil des Schritts besteht darin, dass eine durch den Längsschlitz 16b greifende Befestigungsschraube 21 an der Skala 19b des Ansatzes 15b entlangbewegt und festgelegt wird. Ist dies erfolgt, so ist die Position des Trägers 11b und somit auch der Induktionsspule relativ zu dem Montageträger 17 eindeutig festgelegt. Durch Anziehen der Befestigungsschraube 21 ist der Träger 11b endgültig an dem Montageträger 17 lagegesichert. Das Einschrauben ist auch in einen durchgängigen Längsschlitz 18 möglich, beispielsweise mit einer selbstschneidenden Schraube.

Bei einem Träger 11b, wie er links unten dargestellt ist, kann entsprechend verfahren werden. Als weitere Möglichkeit kommt hier dazu, dass die Befestigungsschraube 21 in eines der nummerierten Schraublöcher der Schraublochlinie 20 eingeschraubt wird. So wird der Schritt des Ausrichtens vorgenommen.

Des weiteren sind in dem Montageträger 17 Kabelführungen 23b vorhanden. Diese bestehen aus ausgestanzten und ausgestellten Klemmungen, die nach Art eines Hakens über die Ober- oder Unterseite des Montageträgers 17 überstehen. In diese Haken kann ein Anschlusskabel für Induktionsheizungen eingelegt bzw. geklemmt werden. Auf diese Art und Weise können die Kabel sauber und definiert verlegt sowie befestigt werden.

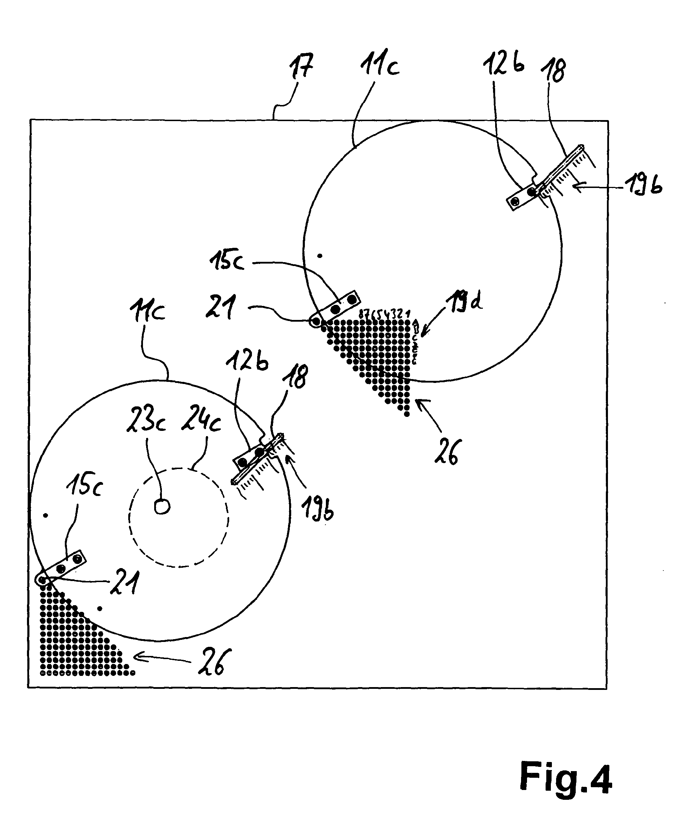

In Fig.4 sind zum einen alternative Ausführungen von Trägern 11c dargestellt. Diese unterscheiden sich von den vorhergehenden dadurch, dass die Ansätze 15c lediglich ein einziges Loch an Stelle eines Längsschlitzes aufweisen. Die Klemmhaken 12b entsprechen dem Klemmhaken aus Fig.3. Entlang der Längsschlitze 18 sind wieder Skalen 19b ähnlich Fig.3 vorgesehen.

Da zur Verstellung des weiteren Freiheitsgrades des Trägers 11c die Längsschlitze 16 aus Fig.1 und 3 fehlen, sind an Stelle einfacher Längsschlitze 18 oder der Schraublochlinie 20 nach Fig.3 Schraublochfelder 26 vorgesehen. Die Schraublochfelder 26 sind mit Skalen 19d versehen, welche im wesentlichen nach Art eines Koordinatensystems, beispielsweise mit Zahlen und Buchstaben, versehen sein können. So kann durch Angabe der beiden Koordinaten genau ein Schraubloch des Schraublochfeldes 26 bestimmt und die Befestigungsschraube 21 darin eingeschraubt werden. Während somit bei Fig.3 zwei Befestigungsmittel pro Träger mit Linienform bzw. Liniencharakter in dem Montageträger 17 vorgesehen sind, sind es bei der Ausführung nach Fig.4 sämtliche Verstellmöglichkeiten in dem Montageträger 17 beinhaltet. Der Träger 11c ist lediglich mit zwei punktförmigen Befestigungsmitteln, nämlich dem Klemmhaken 12b sowie dem Ansatz 15c mit einem einzigen Schraubloch, bestückt.

Der Unterschied zwischen einem Längsschlitz 18 und einer Schraublochlinie 20 ist der, dass mit einem Längsschlitz 18 eine stufenlose Verstellung möglich ist. Mit einer Schraublochlinie 20, oder auch einem Schraublochfeld 26, ist lediglich eine Verstellung mit diskreten Schritten möglich. In den meisten Fällen wird dies jedoch als ausreichend angesehen, da eine Einstellung der Träger 11 bzw. der darauf befindlichen Induktionsspulen in manchen Anwendungsfällen nicht unbedingt millimetergenau erfolgen muss.

In dem Träger 11c, der in Fig.4 links unten dargestellt ist, ist zur Führung von Kabeln der Induktionsspule ein kleineres Loch 23c nach Art einer Kabelführung vorhanden. Diesem Loch 23c entspricht ein darunter sitzendes großes Loch 24c in dem Montageträger 17. Die Größe des Lochs 24c ist dabei so gewählt, dass sich das Loch 23c in jeder Position des Trägers 11c im Bereich des Lochs 24c befindet. Dadurch wird die freie Durchführung eines Kabels auf alle Fälle gewährleistet. Mittels dieser Löcher ist es möglich, Anschlusskabel oder dergleichen einer Induktionsspule durch Träger 11 und Montageträger 17 durchzuführen und entlang der Unterseite zu verlegen.

In Fig.5 schließlich ist ein Aufbau einer Induktionsheizeinrichtung 27 nach einem weiteren Aspekt der hier vorliegenden und zuvor beschriebenen Erfindung dargestellt. Die Induktionseinrichtung 27 ist dabei in einem erfindungsgemäßen Aufnahmeteller 28 untergebracht bzw. darin aufgebaut.

Der Aufnahmeteller 28 ist als ein integrales Teil ausgebildet, und zwar entweder aus Metall gestanzt oder beispielsweise aus Kunststoff tiefgezogen. Er weist einen Außenrand 30 auf, der nach unten gezogen ist. Auf diese Weise wird eine Abstand nach unten sowie eine Verbesserung der Stabilität erreicht. An einer Stelle links vorne geht ein Klemmhaken 12d nach unten ab. Diametral gegenüberliegend ist ein Ansatz 15d vorhanden mit einem Loch zum Durchführen einer Befestigungsschraube.

Radial ein Stück nach innen versetzt weist der Aufnahmeteller 28 an seiner Oberseite eine sich in Umfangsrichtung erstreckende Begrenzung 31 auf. Diese bildet eine Ausrichtungs- bzw. Montagehilfe für die Komponenten der Induktionsheizeinrichtung 27. Zum anderen kann, insbesondere bei einer durchgängigen Begrenzung 31 wie hier dargestellt, die Komponenten der Induktionsheizeinrichtung vollständig eingeschlossen werden. Des weiteren sind in dem Aufnahmeteller 28 sternförmig verlaufende Vertiefungen 33 ausgeformt. Mittig ist eine Ausnehmung 34 vorgesehen.

Wie zu sehen ist, werden Ferritstäbe 36 in die Vertiefung 33 eingelegt. Dabei verschwinden die Ferrite 36 vollständig in den Vertiefungen 33. Aus diesem Grunde sind die Vertiefungen 33 entsprechend zu dimensionieren. Um die Ferrite darin sicher und insbesondere klapperfrei zu befestigen, können die Vertiefungen leicht nach innen gewölbte Wandungen aufweisen. Dadurch ist ein Festklemmen der Ferrite möglich.

Nach den Ferriten 36 wird der Spulenkörper 37 in die Begrenzung 31 eingelegt. Der Spulenkörper 37 ist dabei ringscheibenförmig ausgebildet. Dies entsteht durch entsprechendes Wickeln der Spule 37. Schematisch dargestellt sind Anschlusskabel 38 des Spulenkörpers 37. Sie gehen von einem inneren Bereich ab und sind durch die Ausnehmung 34 in dem Aufnahmeteller 28 geführt. Beispielsweise können diese Anschlusskabel 38 durch die Kabelführungen 23c und ein Loch 24c in dem Montageträger 17 gemäß Fig.4 nach unten geführt werden. Ebenso ist es möglich, dass sie in dem Hohlraum unterhalb des Aufnahmetellers 28, der durch den nach unten gezogenen Außenrand 30 gebildet wird, nach außen geführt werden.

Auf den Spulenkörper 37 kommt zum Abschluss eine scheibenförmige, flache Isolierung 40. Auch diese wird innerhalb der Begrenzung 31 platziert. Sie deckt die Induktionsheizeinrichtung 27 nach oben ab und isoliert beispielsweise gegen eine Glaskeramikplatte, die durch einen aufgestellten heißen Topf erwärmt wird.

Die Oberseite der Isolierung 40 trägt einen beispielhaft dargestellten, flachen Temperatursensor 41. Dieser dient zur Erfassung der Temperatur an der Oberseite der Isolierung 40 bzw. einer darüber verlaufenden Glaskeramikplatte und ist an sich aus dem Stand der Technik bekannt. Der Temperatursensor 41 wiederum weist ein Temperatursensorkabel 42 auf, das durch die in der Regel weiche Isolierung 40, die Innenausnehmung in den Spulenkörper 37 sowie die Ausnehmung 34 in dem Aufnahmeteller 28 geführt ist.

Der Spulenkörper 37 ist dabei eine in sich stabile und handhabbare Baueinheit. Beispielsweise kann dazu die Spule bereits in sich vergossen oder verklebt sein.

Nach dem Durchführen der vorgenannten Montageschritte ist die Induktionsheizeinrichtung 27 fertig aufgebaut. Es kann vorgesehen sein, dass die Ferrite 36, der Spulenkörper 37 oder die Isolierung 40 miteinander oder mit dem Aufnahmeteller 28 verklebt werden. Alternativ kann eine Umhüllung, beispielsweise mit einer Klebefolie oder dergleichen, zumindest des Aufnahmetellers 28 und der Isolierung 40 erfolgen. Auf diese Weise kann eine in sich stabile und sehr gut handhabbare Baueinheit, nämlich die einer Induktionsheizeinrichtung, gefertigt werden.

Dargestellt sind in den Figuren lediglich Verschraubungen bzw. eine Verklemmung als Befestigung der Induktionsheizeinrichtung an einem Montageträger oder dergleichen. Ebenso ist es möglich, einen Träger 11 an seiner Unterseite mit einer Verklebung oder alternativ für eine lösbare Befestigung mit einem textilen Haftverschluss zu versehen. Skalen ähnlich den Skalen 19, die dargestellt sind, könnten in ähnlicher Art und Weise aufgebracht sein. Möglich wären auch kreuzförmige Koordinatensysteme, die auf einen Montageträger 17 aufgebracht sind, und eine eigene Skala aufweisen. Auch hier ist durch ein Verschieben der Induktionsheizung oder Träger hierfür ein genaues Ausrichten gemäß einer vorgegebenen Position möglich.

In weiterer Ausgestaltung der Erfindung kann der Montageträger 17 seitlich mit hochgezogenen Außenrändern versehen sein. Wird ein solcher Montageträger an einer Abdeckung, beispielsweise einem Glaskeramikkochfeld, befestigt, sind die Induktionsheizeinrichtungen wie in einem Gehäuse untergebracht.

Eine oben angesprochene federnde Andrückung an eine Abdeckung kann bei einer Induktionsheizeinrichtung 27 gemäß Fig.5 beispielsweise eine stark elastische Isolierung 40 sein, die gegen eine solche Abdeckung angedrückt werden kann. Des weiteren könnte zwischen dem Aufnahmeteller 28 und dem Spulenkörper 37 eine stark federnde Schicht oder eine große, flächig wirkende Feder angeordnet sein, und diese nach oben drücken.

Wie aus Fig.4 zu erkennen ist, sind hier Skalen 19 lediglich an dem Montageträger 17 und nicht an dem Träger 11 vorgesehen. Das Ausrichten erfolgt durch Massnehmen mit dem Rand des Trägers 11c an der Skala.

## Patentansprüche

1. Befestigungsvorrichtung für insbesondere flächige elektrische Heizeinrichtungen (27), **gekennzeichnet durch**:
- Befestigungsmittel (12, 21) zur Befestigung der Heizeinrichtung (27) an einem Montageträger (17),
- die Befestigungsmittel (12, 21) sind ausgebildet derart, dass die Befestigung der Heizeinrichtung (27) an dem Montageträger (17) von der Position her variabel ist.

2. Befestigungsvorrichtung nach Anspruch 1, **dadurch gekennzeichnet, dass** die Befestigungsvorrichtung den Montageträger (17) aufweist.

3. Befestigungsvorrichtung nach Anspruch 1 oder 2, **dadurch gekennzeichnet, dass** die Heizeinrichtung (27) mittels der Befestigungsvorrichtung unter einer Abdeckung, wie beispielsweise einem Glaskeramikkochfeld, anbringbar ist.

4. Befestigungsvorrichtung nach einem der vorhergehenden Ansprüche, **gekennzeichnet durch** Markierungsmittel (19) zur Markierung verschiedener Positionen der Befestigung zwischen Heizeinrichtung (27) und Montageträger (17).

5. Befestigungsvorrichtung nach Anspruch 4, **dadurch gekennzeichnet, dass** die Markierungsmittel (19) zumindest teilweise, insbesondere größtenteils, an dem Montageträger (17) ausgebildet sind, wobei vorzugsweise ein Bereich der Heizeinrichtung (27) zur Zusammenwirkung mit den Markierungsmitteln ausgebildet ist.

6. Befestigungsvorrichtung nach Anspruch 4 oder 5, **dadurch gekennzeichnet, dass** die Markierungsmittel (19) einen im wesentlichen kontinuierlichen Verlauf aufweisen, insbesondere geradlinig sind, wobei sie vorzugsweise am Stück und/oder in einem Bereich für mindestens zwei Heizeinrichtungen (27) ausgebildet sind.

7. Befestigungsvorrichtung nach einem der Ansprüche 4 bis 6, **dadurch gekennzeichnet, dass** die Markierungsmittel (19) eine Skala aufweisen, insbesondere mit im wesentlichen linearer Skalierung und/oder mit einer Skaleneinteilung mit festen und gleichen Abständen.

8. Befestigungsvorrichtung nach einem der Ansprüche 4 bis 7, **dadurch gekennzeichnet, dass** die Markierungsmittel (19) in einem Bereich zwischen Heizungseinrichtung (27) und Montageträger (17) angeordnet sind derart, dass die Position bzw. Festlegung einer Heizungseinrichtung an dem Montageträger mittels Bestimmen einer von mehreren Markierungen der Markierungsmittel durch Anliegen eines Außenrandes (30) der Heizungseinrichtung daran erfolgt.

9. Befestigungsvorrichtung nach einem der vorhergehenden Ansprüche, **dadurch gekennzeichnet, dass** die Befestigungsmittel (12, 21) einfach lösbar sind, vorzugsweise wiederholt lösbar und befestigbar, wobei insbesondere die Befestigungsmittel wenigstens eine Befestigungsschraube (21) aufweisen, die an der Heizungseinrichtung (27) angeordnet ist und in den Montageträger (17) eingreift, wobei sie vorzugsweise in eine Öffnung (18, 20, 26) eingreift.

10. Befestigungsvorrichtung nach Anspruch 9, **dadurch gekennzeichnet, dass** die Zuordnung einer Befestigungsschraube (21) zu der Heizungseinrichtung (27) mittels der Befestigungsmittel in einem bestimmten Bereich verstellbar ist, insbesondere entlang eines Längsschlitzes (18), wobei vorzugsweise ein Längsschlitz bogenförmig ist.

11. Befestigungsvorrichtung nach Anspruch 9, **dadurch gekennzeichnet, dass** die Befestigungsmittel flächig und werkzeuglos lösbar sind, vorzugsweise wiederholt verwendbar ausgebildet sind, wobei sie insbesondere als textiler Haftverschluss oder dergleichen ausgebildet sind.

12. Befestigungsvorrichtung nach einem der vorhergehenden Ansprüche, **dadurch gekennzeichnet, dass** die Befestigungsmittel (12, 21) mindestens zwei Punkte aufweisen zur definierten Befestigung der Heizungseinrichtung (27) an dem Montageträger (17), wobei vorzugsweise die Befestigung an beiden Punkten in einem bestimmten Bereich verstellbar ist und insbesondere die Befestigungsmittel an einem Punkt eine Verschraubung (21) und an einem anderen Punkt einen Befestigungs- oder Klemmhaken (12) aufweisen.

13. Befestigungsvorrichtung nach einem der vorhergehenden Ansprüche, **dadurch gekennzeichnet, dass** der Montageträger (17) zur Befestigung an einer Abdeckung ausgebildet ist und insbesondere eine der Fläche dieser Abdeckung angepasste Fläche definiert, vorzugsweise entsprechend als Rahmen oder Grundplatte.

14. Befestigungsvorrichtung nach einem der vorhergehenden Ansprüche, **dadurch gekennzeichnet, dass** der Montageträger mehrteilig ist und einen Haupt-Montageträger (17) sowie mindestens einen Unter-Montageträger (11) aufweist, wobei mindestens eine Heizeinrichtung (27) mittels eines Unter-Montageträgers an dem Haupt-Montageträger befestigbar ist, wobei vorzugsweise vier Heizeinrichtungen mittels mehrerer Unter-Montageträger an einem Haupt-Montageträger befestigbar sind.

15. Befestigungsvorrichtung nach Anspruch 14, **dadurch gekennzeichnet, dass** die Unter-Montageträger als Bügel zum Übergreifen einer Heizeinrichtung ausgebildet sind, wobei vorzugsweise Markierungsmittel an dem Unter-Montageträger vorgesehen sind und insbesondere die Unter-Montageträger mit ihren Enden an dem Haupt-Montageträger befestigbar sind.

16. Befestigungsvorrichtung nach einem der vorhergehenden Ansprüche, **dadurch gekennzeichnet, dass** die Heizeinrichtung (27) höhenverstellbar an dem Montageträger (17) befestigbar ist, wobei sie vorzugsweise selbständig höhenverstellbar ist, insbesondere mittels einer Federeinrichtung.

17. Befestigungsvorrichtung nach einem der vorhergehenden Ansprüche, **dadurch gekennzeichnet, dass** die Heizeinrichtung (27) zumindest einen stabilen Außenrahmen oder dergleichen aufweist, insbesondere aus Kunststoff, wobei der Außenrahmen vorzugsweise als Teller (28) ausgebildet ist.

18. Befestigungsvorrichtung für flächige elektrische Heizeinrichtungen, insbesondere nach Anspruch 17, **dadurch gekennzeichnet, dass** eine Heizeinrichtung (27) eine Induktionsheizung ist mit einer flachen, runden Induktionsspule (37), wobei die Induktionsheizung in einem Aufnahmeteller (28) angeordnet ist und vorzugsweise der Aufnahmeteller Teil eines Montageträgers und/oder der Befestigungsmittel ist.

19. Befestigungsvorrichtung nach Anspruch 18, **dadurch gekennzeichnet, dass** der Aufnahmeteller (28) Ausformungen (33) aufweist zur genauen Positionierung und/oder Befestigung von Teilen der Induktionsheizung, insbesondere von Ferriten (36).

20. Befestigungsvorrichtung nach Anspruch 18 oder 19, **dadurch gekennzeichnet, dass** der Aufnahmeteller (28) eine Kabelführung für Anschlusskabel (38) der Heizeinrichtung (27) aufweist, wobei vorzugsweise die Kabelführung mindestens einen Kabeldurchlass (34) aufweist, insbesondere einen Kabelkanal.
